# EUROPEAN PATENT APPLICATION

(11) **EP 1 059 463 A1**
(43) Date of publication of application: **13.12.2000**
(21) Application number: 00304825.3
(22) Date of filing: 07.06.2000
(51) Int. Cl.: F16C 25/08

(54) **Roller bearings**

(30) Priority: 10.06.1999 GB 9913375
(71) Applicant: Sarnatech BNL Limited, North Yorkshire HG5 8LF (GB)
(72) Inventor: Naylor, Adrian, Knaresborough, North Yorkshire HG5 8LF (US)
(74) Representative: Denmark, James

(57) **Abstract**

A roller bearing comprising an inner and outer race is described. The inner race is provided with a bore therethrough to receive a usually stationary spindle which supports the bearing. The bearing is commonly used in seat belts for cars and may be waisted so that the belt passing over the bearing is maintained substantially axially centrally of the bearing. In accordance with the invention, the races are provided with tracks in which the balls of the bearing run, said tracks being axially offset from the tracks of the adjacent race, but in opposite directions on either side of the middle of the bearing. A springing means is also provided on the inner race which when compressed or extended axially biases the tracks of the inner race towards the tracks of the outer race thus exerting pressure on the balls clamped therebetween. Ideally, the spring means comprises a leaf spring integrally formed with the inner race which is compressed axially to effectively bias the inner race tracks axially inwardly of the bearing against the balls and ultimately towards the inwardly disposed tracks of the outer race. The inner races are additionally provided with ribs which engage behind the tracks of the outer race and prevent the inner races from being easily removed from the bearing.

## Description

This invention relates to roller bearings of the type wherein the rolling elements are balls.

Specifically, the invention concerns what are sometimes called "plastic" roller bearings in that at least one of the races is made of plastics material. Usually both races are made of this material which is of course of hard wearing characteristic, having regard to the task to be performed. The rolling elements can be of plastic as well, but steel balls are still used mostly in these bearings as steel balls can be produced more accurately than, and are more hard wearing than, plastic balls.

As can be appreciated however, these bearings are being used more and more, as they are much less expensive than precision machined steel bearings, both from a material point of view and from a production point of view. It has been found that in many applications, precision machined steel bearings are not really necessary for the task to be performed, hence the popularity of plastic bearings.

However, plastic bearings still have some disadvantages compared with precision steel bearings, including that because their manufacture precludes narrowly defined tolerances as are usual in the manufacture of steel bearings, they tend to be noisier in operation compared with the steel bearings, and although tough plastic is used for the bearing races, plastic does not wear as well as steel.

The present invention seeks to provide an improved construction of ball roller bearing, having particular advantage in relation to plastic roller bearings, although there is no reason why in principle the invention could not be applied to steel roller bearings.

According to the invention there is provided a ball roller bearing comprising inner and outer bearing races with balls running on tracks within the races, such that the race tracks of the inner and outer races are offset in the direction of the axis of rotation of the bearing, and including spring means adapted to resiliently urge at least one of the bearing races in a direction tending to bring the race tracks of the bearing more into radial alignment in relation to the axis of rotation of the bearing.

By such means, firstly the bearing can be made to run less noisily than similar bearings without the spring loading, especially where the bearing is one employing plastic races, and where tolerances are more liberal than for example precision made steel race bearings.

Secondly, such a construction allows the or each spring loaded bearing race to move axially under excessive load, which has the effect in the preferred construction of the bearing, of causing at least one of the races to yield and to move axially of the bearing, permitting the balls temporarily to move off at least one of the race tracks and be supported by another part of the bearing, thereby preventing track wear.

In a particularly preferred construction, the inner race, which is adapted to be received on a spindle, is spring loaded and can yield on the spindle, the spindle in use being intended to be stationary, and the outer race, for example embodied in a roller member, being adapted to be rotated. The inner race is preferably of plastic material, and suitable the spring means may be integral with the inner race, being in the form of a leaf spring. Such a spring in use is adapted to sit against a housing in which the beating is located, to cause the spring to be tensioned in turn to provide the spring loading of the inner race.

The leaf spring may comprise two flat arms arranged diagonally in relation to the inner race, and a ring through which the spindle passes in use and with which the arms are integral, the other ends of the arms being integral with a circular race body on which the race track is formed.

Preferably, the ball bearing comprises a rotating sleeve in which at the ends are formed two of said outer races, and inside the sleeve are two inner races, the inner race tracks being located outwardly of the outer race tracks, and the springs of the inner races lying at least partly outwards of the ends of the sleeve so that they can be engaged by the housing in which the bearing fits when in use. The bearing may be adapted for use in any suitable location, although one specific use which has been identified is in seat belts for vehicles, air craft or the like.

The inner race bodies adjacent the race tracks thereof, may be undercut to allow the balls to move off the races and to ride on the undercuts when the bearing is subjected to the said excessive loading (which may occur regularly depending upon the application to which the bearing is put) as a result of the inner bearings moving axially (outwardly in this example) of the bearing. Additionally, the clearance between the bore of the sleeve and the spindle may such that when such excess loading takes place, for example when the associated seat belt locks under severe braking (in the case of a car seat belt) the sleeve seats on the spindle removing the loading on the balls and their seating surfaces. When the excessive loading is removed, so the inner races return to the original positions.

An embodiment of the invention will now be described by way of example with reference to the accompanying drawings wherein;-
Figs. 1, 2, 3 and 4 are respectively a perspective view, a sectional view, a side view and an end view of a roller bearing according to the invention;
Fig. 5 is an enlarged view of the detail ringed in Fig. 2;
Figs 6, 7 and 8 respectively are a plan view, a sectional side view, and an end view of the bearing sleeve; and
Fig. 9 is and enlarged view of the detail ringed in Fig. 7.

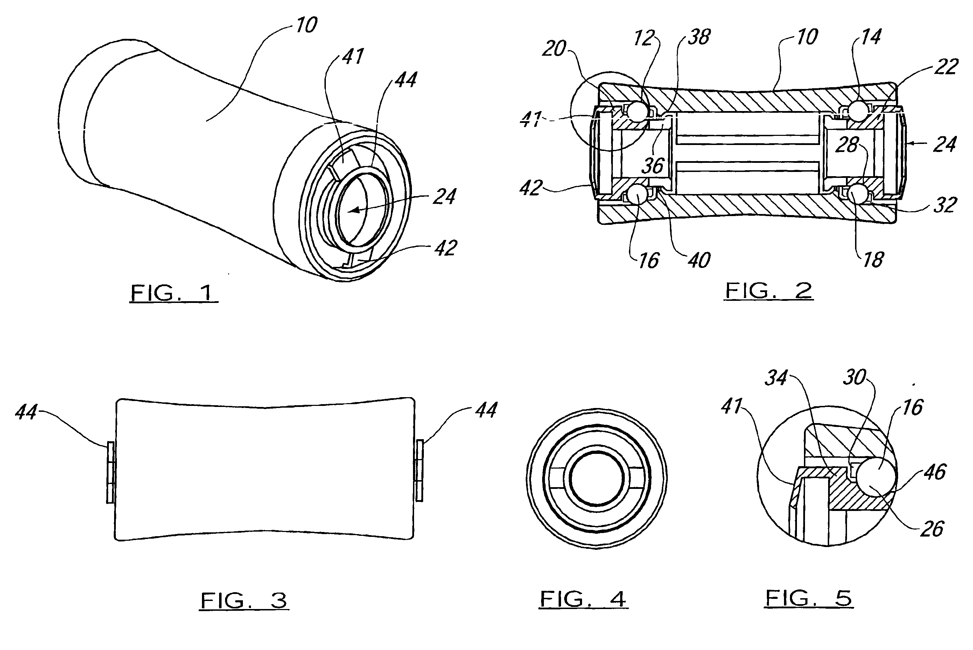

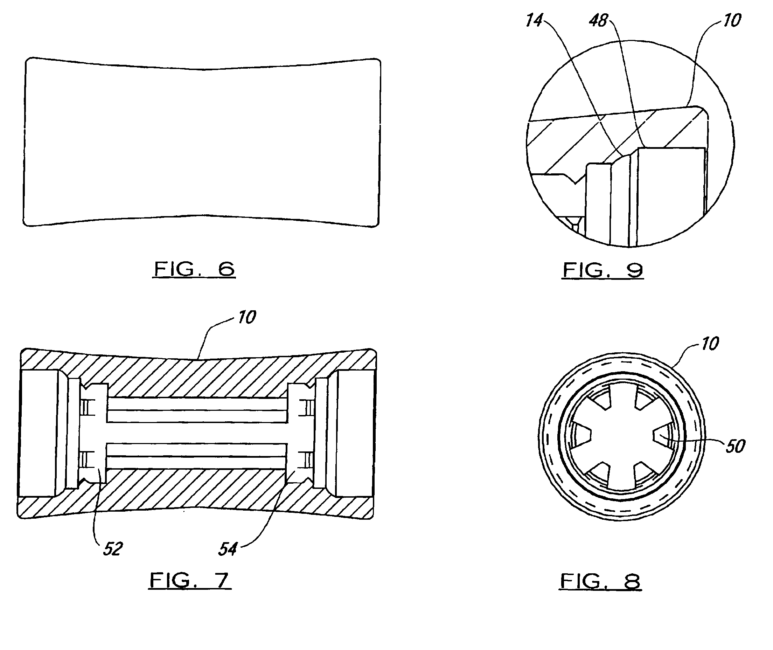

Referring to the drawings, there is shown in Figs. 1 to 4 a roller bearing which is of generally cylindrical shape, and is provided with an outer sleeve 10. The sleeve 10 is of plastics material, and it is slightly waisted or narrowed in the middle section in order that a running band which engages the outer surface of the sleeve will remain centralised as the sleeve turns on the bearing. The sleeve is shown in more detail in Figs. 7 and 8 to which reference will be made hereinafter, but as can be seen from Fig. 2, the sleeve 10 is a one piece component and is in plastics material of the type used for these bearings. The sleeve 10 provides two outer races of the bearing, and has race track 12 and 14 on which steel balls 16 and 18 run.

The balls 16 and 18 are supported towards the inside of the bearing by inner races 20 and 22. The races 20 and 22 are of identical construction but are symmetrically arranged in relation to the centre line of the bearing.

The inner races 20 and 22 are of circular configuration and the entire beating is adapted to receive a spindle in a bore 24 of the bearing.

The inner races 20 and 22 are provided with race tracks 26 and 28 on which the balls 16 and 18 run.

It is to be noticed that the race tracks 26 and 12 on the one hand and 28 and 14 on the other hands are offset in the axial direction of the bearing so that in fact the thrust direction across the balls 16 and 18 lies at an angle to the bearing axis, but the inclined thrust directions are symmetrically arranged about the central region of the bearing. The balls 16 and 18 are held in spaced circumferential arrangement by means of conventional bearing cages 30 and 32 which may also be of plastics material.

Each of the inner races 20 and 22 defines a spring arrangement whereby in use the inner race will be spring-loaded in an axially inwards direction, and to this end as shown in Fig. 5, each of the inner races 20 and 22 comprises a race body 34 of circular configuration and which has the race track 26 formed therein. The body 34 has a series of fingers 36 which project inwardly, and have a bead 38 which will interfere with a corresponding rib 40 on the inner bore of the sleeve 10 to prevent the inner bearing 20 from coming loose in operation. These fingers 36 enable the inner races to be push fitted into position in the sleeve, through the ends of the sleeve.

The spring arrangement is provided on the outer side of the body 34, and comprises a pair of arms 41 and 42 as best seen in Fig. 1. These arms are integrally formed with the body 34 and also with a support ring 44 which lies concentrically with the bearing axis. The arms 41 and 42 are inclined as shown clearly in Fig. 5 so that the ring 44 lies outwardly of the ends of the sleeve 10 (indicated effectively in Fig. 3). The inner bearings are one piece plastic mouldings, and hence the spring effect is achieved by the resiliency of the arms 41 and 42.

It is also to be noted from Fig. 5 that the body 30 of the inner race is undercut as shown at 46, for a purpose to be explained hereinafter.

As also shown in Fig. 9, the sleeve 10 is undercut in the region 48 for the same purpose.

Finally, referring to Figs. 7 and 8, the bore of the sleeve 10 is defined by a plurality of equally spaced and inwardly projecting ribs 50 which are of the length indicated to create cavities 52 and 54 for receipt of the fingers 36 of the inner races 20 and 22. The tops of these ribs define the bore of the sleeve 10, and these tops are spaced at a controlled clearance in relation to the outer diameter of a central spindle which is fitted in the bore in so as not to contact the spindle in normal use.

In the functioning of the bearing, it is provided with said central spindle which may be of steel, and when it is fitted into the location in the apparatus, say a seat belt assembly, it is to occupy, the rings 44 are engaged by adjacent housing or shoulders so as to compress the rings 44 axially towards the centre of the bearing. This has the effect of spring loading the inner races 20 and 22, so that any slack between the race tracks 12 and 26 and 14 and 28 is taken up, and the bearing, around which a belt will be trained, will run in a less noisy manner than it would do were it not for this spring loading. Additionally, should the bearing be subjected to any excessive load (which may be anticipated in the design of the bearing for the particular application-such as the seat belt assembly locking up in a braking emergency) the inner races 20 and 22 can in fact move outwardly under this load (due to the inclined thrust planes between the race tracks), and the balls can ride on the undercuts 46 and/or 48, and thereby move off the race tracks 12, 14, 26 and 28 and the sleeve 10 (which stops rotating in the seat belt application) deflects in the direction of the loading onto spindle using up the clearance therebetween, whereby the loading on the balls is removed and excessive and rapid wear or Brinel point creation on the races can be avoided. When the excessive load is removed, the spring loading of the inner races causes the bearing to revert to the normal position in which the balls run on the race tracks.

Other designs for the spring loading of the bearings may be adopted, but the bearing illustrated carries considerable advantages that the bearing can run in a less noisy manner, and excessive wear of the race tracks can be avoided.

Of particular advantage is the making of the races with integral spring means, and depending upon the design, the spring means can be on the inner races or the outer races.

The use of undercuts and bore clearance enables the balls to move clear of the race tracks, and as the inner races move axially outwards on the spindle, so the ribs 50 then come into contact with the spindle thus spreading the load over a wide area and protecting the raceways from damage.

## Claims

1. A ball roller bearing comprising inner and outer bearing races with balls running on race tracks of the races, the race tracks of the inner and outer races are offset in the direction of the axis of rotation of the bearing characterised in that the bearing includes spring means configured to resiliently urge at least one of the bearing races in a direction tending to bring the race tracks of the bearing more into radial alignment in relation to the axis of rotation of the bearing.

2. A bearing according to claim 1 characterised in that the inner race is provided with a bore which is adapted to receive on a spindle.

3. A bearing according to claim 2 characterised in that said inner race is spring loaded and can yield on the spindle.

4. A bearing according to any preceding claim characterised in that the inner race in use is intended to be stationary and the outer race is adapted to be rotated.

5. A bearing according to any preceding claim characterised in that the inner race is of plastic material.

6. A bearing according to any preceding claim characterised in that the spring means is integrally formed with the inner race.

7. A bearing according to claim 6 characterised in that the spring means is in the form of a leaf spring which in use is adapted to sit against a housing in which the bearing is located, to cause the spring to be tensioned in turn to provide the spring loading of the inner race.

8. A bearing according to claim 7 characterised in that the leaf spring comprises two flat arms arranged diagonally in relation to the inner race, and a ring through which the spindle passes in use and with which the arms are integral, the other ends of the arms being integral with a circular race body on which the race track is formed.

9. A bearing according to claim 6 characterised in that the ball bearing comprises a rotating sleeve in which at the ends are formed two of said outer races, and inside the sleeve are two inner races, the inner race tracks being located outwardly of the outer race tracks, and the springs of the inner races lying at least partly outwards of the ends of the sleeve so that they can be engaged by a housing in which the bearing fits when in use.

10. A bearing according to any preceding claim characterised in that the bearing is adapted for use in seat belts for vehicles, air craft or the like.

11. A bearing according to any preceding claim characterised in that the inner race bodies adjacent the race tracks thereof are undercut to allow the balls to move off the races and to ride on the undercuts when the bearing is subjected to the said excessive loading as a result of the inner bearings moving axially of the bearing.

12. A bearing according to claim 11 characterised in that the clearance between the bore of the sleeve and the spindle is such that when such excess loading takes place, the sleeve seats on the spindle removing the loading on the balls and their seating surfaces.
